# EUROPEAN PATENT APPLICATION

(11) **EP 2 590 016 A1**
(43) Date of publication of application: **08.05.2013**
(21) Application number: 11800706.1
(22) Date of filing: 23.06.2011
(51) Int. Cl.: G03B 17/14, G02B 7/02, G02B 15/08, G02B 23/02, G03B 17/56, G02B 23/06

(54) **TELEPHOTO LENS UNIT**

(30) Priority: 29.06.2010 JP 2010147108
(71) Applicant: Kowa Company, Ltd., Nagoya-shi, Aichi 460-8625 (JP)
(72) Inventor: OGUCHI Yasunari, Hamamatsu-shi Shizuoka 431-2103 (JP)
(74) Representative: Kronthaler, Wolfgang N.K.
(86) International application number: PCT/JP2011/064356
(87) International publication number: WO 2012/002241

(57) **Abstract**

A telephoto lens unit (1) having a lens barrel that supports a telephoto lens and capable of being mounted on and dismounted from a camera body (16) comprises a front lens barrel section (11) that supports the telephoto lens with the subject side defined as the front, and a rear lens barrel section (13) that can be mounted on and dismounted from the front lens barrel section. The distance from the image-most surface of the telephoto lens to the image formation plane of the telephoto lens is kept sufficiently long. Converter lens units (12, 14) for elongating or shortening the focal distance are mounted on the front lens barrel section (11) instead of the rear lens barrel section (13) to provide interchangeable telephoto lenses for a camera having different focal lengths. Also, an erecting prism unit (15) and an eyepiece unit (17) can be connected instead of the rear lens barrel section to enable the telephoto lens to function as a terrestrial telescope.

## Description

### Technical Field

The present invention relates to a telephoto lens unit capable of being used as an interchangeable telephoto lens for a camera and used as a terrestrial telescope.

### Background Art

When telephotography is to be performed using a camera, a lens unit having a mount compatible with each manufacturer must be mounted, such a lens unit being referred to as a so-called interchangeable lens in a single lens reflex camera. Alternatively, as other means, a camera is attached to a terrestrial telescope via a camera adapter to perform telephotography. There is also a photography method referred to as so-called direct-focus photography performed via a mount adapter on an astronomical telescope. Each approach has advantages and disadvantages.

In the case in which an interchangeable lens is used, it is possible to perform an auto focus (AF) or control the aperture from a camera unit, and there are also configurations having a zoom function. This allows a desired telescopic image to be taken with comfortable operability, but the drawback of an interchangeable telephoto lens having excellent optical performance is its high cost. Also, an interchangeable telephoto lens does not function as a terrestrial telescope because an erecting prism having a sufficient field of view cannot be inserted in the rear portion of the interchangeable lens.

In the case of an astronomical telescope, relatively low-cost telephotography is possible because the lens configuration is simple. However, there is no configuration such as an AF and aperture, and the entire length is extended and contracted during focusing. This causes unbalance to occur in the center of gravity including a camera and makes it difficult to use.

In the case of a terrestrial telescope for which a camera adapter is used, it is possible to provide a telephotographic system at lower cost than an interchangeable lens. This enables telephotography and observation as a terrestrial telescope. However, the system, being inherently a telescope, does not have components such as an AF and aperture, and is inferior to an interchangeable lens in terms of photographic performance and operability.

There is a need for a telephoto lens that can be immediately adapted for use as an interchangeable camera lens and when desired also for use as a terrestrial telescope, and that has the same cost as an ordinary terrestrial telescope.

A telephotographic system capable of fine focal adjustment and capable of being readily mounted on a camera is disclosed in Patent Document 1, and a photography method referred to as "digiscoping," in which an eyepiece is attached is disclosed in Patent Document 2.

### Prior Art Documents

### Patent Documents

Patent Document 1: Japanese Patent Laid-open Publication No. Hei 9-33823
Patent Document 2: Japanese Patent Laid-open Publication No. 2007-193081

### Summary of Invention

### Problems to be Solved by the Invention

There is no great difference between a terrestrial or astronomical telescope and an interchangeable telephoto lens. In an extreme example, the simplest telephoto lens can be configured merely using a total set of convex and concave lens as a positive group. A terrestrial telescope or an interchangeable telephotographic lens mainly employs a telephoto configuration in which a concave group is inserted behind the positive group in order to reduce the entire length thereof. A focus function is indispensable for application purposes. In the unmodified configuration described above, the entire length varies during focusing, making it difficult to use. In order to avoid this situation, some of the lenses (or the prism) must be moved to carry out focusing (inner focusing).

Also, an ordinary interchangeable lens cannot be used without modification for the following reasons.

Since a terrestrial telescope must be able to produce an erect image for observation, a prism or other image-erecting means for erecting the image must be provided in a distance from the image-most surface of the constituent lenses to the image plane (referred to as optical flange back (OFB)). In order to obtain a sufficient field of view in a terrestrial telescope, a large prism is required and an OFB with a sufficient length is needed. A converter unit for changing the magnification (focal distance) for the convenience of the user is placed in this OFB portion. If there is sufficient space in this location, converters of various magnifications can be fabricated. The telephoto lens has a long focal distance, so that such space is ensured to some extent, but the interchangeable lens is ordinarily configured such that the rear part thereof cannot be detached as a unit because the camera mount of various makers has a fixed distance to the sensor.

The present invention is made in view of the foregoing points, and an object thereof is to provide a telephoto lens unit that can be used as an interchangeable lens for telephotography and that can also be used as a terrestrial telescope.

### Means for Solving the Problems

The present invention (claim 1) that solves the above-described problem provides a telephoto lens unit having a lens barrel that supports a telephoto lens and capable of being mounted on and dismounted from a camera body, comprising:
a front lens barrel section that supports the telephoto lens with the subject side defined as the front, and a rear lens barrel section that can be mounted on and dismounted from the front lens barrel section,
wherein the distance from the image-most surface of the telephoto lens to the image formation plane of the telephoto lens is set to be a distance in which a converter lens unit that shortens the focal distance is mounted on the front lens barrel section instead of the rear lens barrel section to enable photography with a shortened focal distance.

The present invention (claim 3) that also solves the above-described problem provides a telephoto lens unit having a lens barrel that supports a telephoto lens and capable of being mounted on and dismounted from a camera body, comprising:
a front lens barrel section that supports the telephoto lens with the subject side defined as the front, and a rear lens barrel section that can be mounted on and dismounted from the front lens barrel section,
wherein the distance from the image-most surface of the telephoto lens to the image formation plane of the telephoto lens is set to be a distance in which an image-erecting means and an eyepiece unit are connected instead of the rear lens barrel section to enable the telephoto lens to function as a terrestrial telescope.

### Effect of the Invention

In the present invention, the distance from the image-most surface of the telephoto lens to the image formation plane thereof can be kept long. The rear lens barrel section of the telephoto lens unit can be disconnected and, instead thereof, a converter lens unit having a different magnification can be connected. Therefore, by connecting the telephoto lens unit to the camera body a desired telescopic image of a subject can be photographed with a different focal distance (i.e., a different magnification).

Instead of the disconnected rear lens barrel section, an image-erecting means and an eyepiece unit are also connected to enable the telephoto lens to be used as a terrestrial telescope.

### Brief Description of Drawings

FIG. 1 is a side view showing the configuration of the telephoto lens unit in a state when disconnected from the camera body on which the telephoto lens unit is mounted;
FIG. 2 is an optical view showing the optical system of the telephoto lens unit in a state in which the telephoto lens unit is mounted on the camera body;
FIG. 3 is an illustrative view showing various optical configurations using the telephoto lens unit;
FIG. 4 is an optical view showing the configuration when a 0.7 magnification converter lens unit is connected;
FIG. 5 is an optical view showing the configuration when a 1.7 magnification converter lens unit is connected;
FIG. 6 is an optical view showing the configuration when an erecting prism unit and an eyepiece unit are connected to function as a terrestrial telescope; and
FIG. 7 is an optical view showing the configuration when a focus lens is disposed in the rear lens barrel section of the telephoto lens unit.

### Mode of Carrying Out the Invention

The present invention will be described based on embodiments as shown in the drawings.

### Embodiments

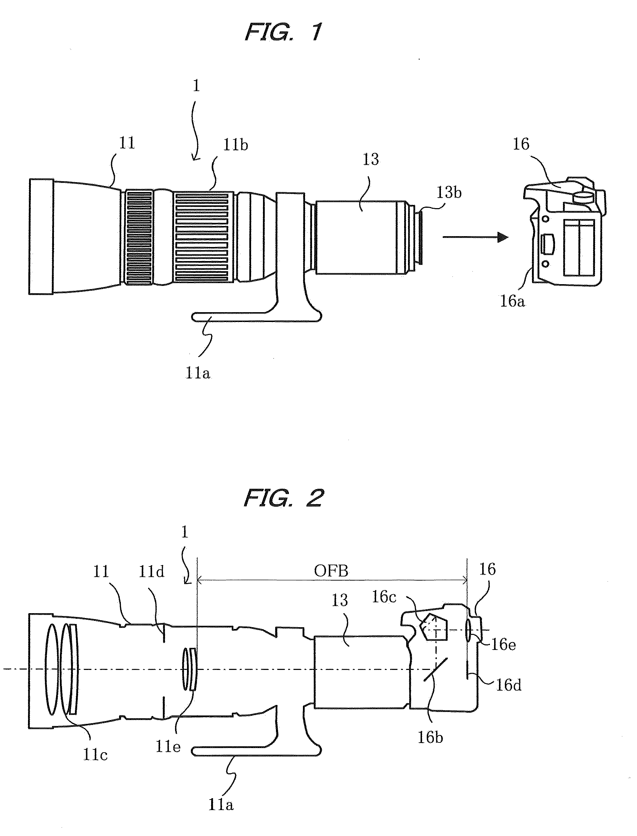

FIG. 1 shows an embodiment of the present invention in which a telephoto lens unit 1 is disconnected from a camera body 16 that is configured as a single lens reflex camera; and FIG. 2 shows the internal optical system of the telephoto lens unit 1 in a state when mounted on the camera body 16.

The telephoto lens unit 1 is composed of a front lens barrel section 11 (main unit of the telephoto lens unit) that supports a telephoto lens, with the subject side (left side in FIG. 1) being defined as the front, and a rear lens barrel section 13. The front lens barrel section 11 and the rear lens barrel section 13 can be disconnected as later described, and are mutually detachable.

A tripod seating 11a is attached to the telephoto lens unit 1, and the tripod seating 11a is attached to a tripod. This allows the telephoto lens unit 1 to be stably disposed in a predetermined position.

An objective lens system 11c, an aperture 11d, and a focus lens 11e are supported inside the front lens barrel section 11 of the telephoto lens unit 1, as shown in FIG. 2, and a focus ring 11b shown in FIG. 1 can be rotated to move the focus lens 11e forward and backward along the optical axis and adjust the imaging position of the subject. The aperture 11d is disposed on the subject side from focus lens 11e, but may also be disposed on the image side.

A mount 13b is attached to the image side of the rear lens barrel section 13 of the telephoto lens unit 1 so as to allow the telephoto lens unit 1 to be mounted on the camera body of various camera makers. This makes it possible to use the telephoto lens unit 1 as an interchangeable telephoto lens for a camera. The mount 13b has a special shape that differs among makers as well as with the same maker depending on the camera product series.

A fitting part (mount) 16a for fitting the mount 13b is attached to the camera body 16, and a well-known popup mirror 16b, a pentaprism 16c, a solid-state imaging elements (CCD or the like) 16d, and a lens 16e are disposed therein.

The objective lens system 11c and the focus lens 11e constitute the telephoto lenses (group) of the telephoto lens unit 1. The lens configuration in the drawing is an example and there is no limitation on the number and configuration of the lenses. In the present embodiment, an optical system having a focal distance of 500 mm and an aperture ratio of F5.6 is obtained by this configuration of lenses.

With such a configuration, when the focus is manually adjusted using the focus ring 11b and the shutter button (not shown) provided to the camera body 16 is pressed, the mirror 16b pops up and the telescopic image of the subject in focus can be imaged by the solid-state imaging elements 16d.

In the present invention, the distance from the image-most surface of the telephoto lens (the image-most surface of the focus lens 11e) to the image formation plane of the telephoto lens; i.e., the image formation plane of the solid-state imaging elements 16d, the distance being so called "optical flange back" (OFB) is sufficiently ensured. This makes it possible to disconnect the rear lens barrel section 13 from the front lens barrel section 11 and instead thereof connect converter lens units of various magnifications to the front lens barrel section 11 in order to change the focal distance to photograph a telescopic subject. Alternatively, it is possible to connect an image-erecting means and an eyepiece unit and use the telephoto lens as a terrestrial telescope.

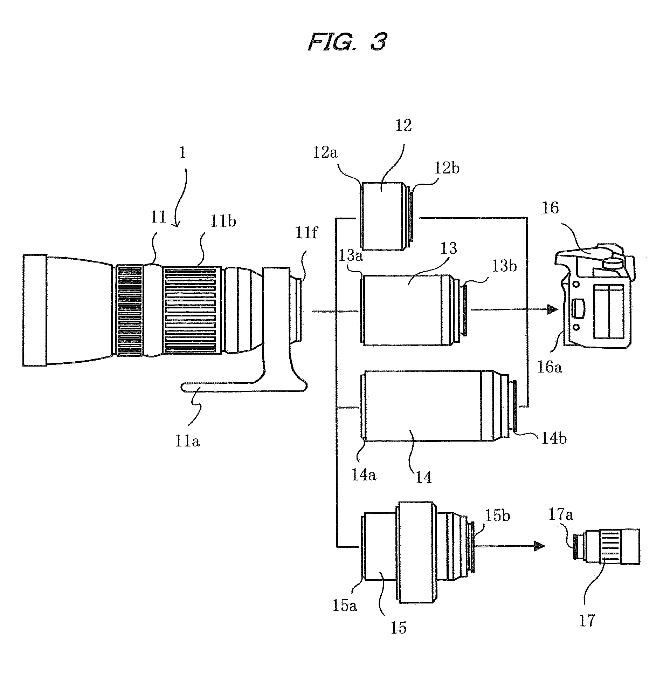

FIG. 3 shows various optical configurations obtained by elongating the OFB. A connector 11f is attached to the front lens barrel section 11 and a connector 13a that fits to the connector 11f is attached to the rear lens barrel section 13 so that the rear lens barrel section 13 can be separated from the front lens barrel section 11 of the telephoto lens unit 1 and the rear lens barrel section 13 can be coupled to the front lens barrel section 11. The connector 11f and the connector 13a are fitted together to provide the telephoto lens unit 1 with a configuration as shown in FIGS. 1 and 2.

Described hereinafter are various optical configurations obtained using the long OFB space of the telephoto lens unit 1 of the present invention.

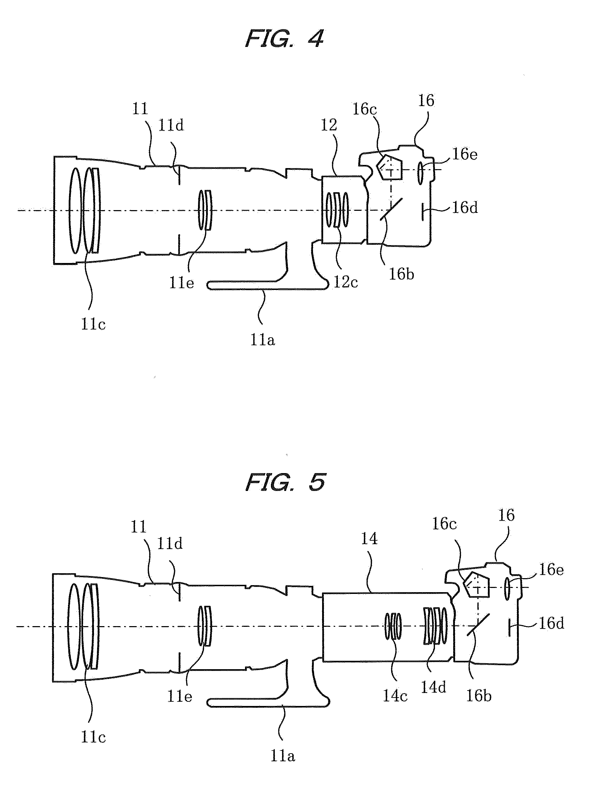

In FIG. 3, a 0.7 magnification converter lens unit 12 is connected instead of the rear lens barrel section 13 to the front lens barrel section 11. This allows the focal distance obtained when the rear lens barrel section 13 is connected to be made 0.7 times and enables the subject to be telephotographed at reduced magnification (i.e., a short focal point and bright F value). The 0.7 magnification converter lens unit 12 is provided with a connector 12a and a mount 12b that correspond to the connector 13a and the mount 13b of the rear lens barrel section 13, and the front lens barrel section 11 and the camera body 16 can be connected via the 0.7 magnification converter lens unit 12. Also, a converter lens 12c having positive power that enables 0.7 times the focal distance is disposed inside the 0.7 magnification converter lens unit 12, as shown in FIG. 4.

The basic technique is the same as that referred to as a reducer in an astronomical telescope. However, it is impossible to make a converter having a magnification of smaller than 1 using a conventional inner focus-type interchangeable camera lens. In order to fabricate a converter that makes the focal distance shorter than the original, a lens group that is positive in total must be inserted between the initial telephoto lens and the solid-state imaging elements. In such a case, the entire length of the telephoto lens from the endmost lens surface thereof to the imaging plane including the converter must be made shorter than the OFB. It is apparent from FIG. 3 that the 0.7 magnification converter lens unit 12 is shorter in the optical axis direction than is the rear lens barrel section 13. Therefore, the focal distance cannot be made shorter when the rear lens barrel section 13 is an integral unit.

In the present invention, the OFB distance is sufficiently ensured, and the rear lens barrel section 13 can be disconnected. Therefore, the 0.7 magnification converter lens unit 12 is connected instead of the rear lens barrel section 13 to enable a subject to be telephotographed at reduced magnification, i.e., with shortened focal distance, even using an inner focus-type configuration.

The configuration of FIG. 4 in which the 0.7 magnification converter lens unit 12 is connected provides an interchangeable telephoto lens for a camera having a focal distance of 350 mm and an aperture ratio of F4.0, and it is effective when there is a desire to use a configuration with a slightly wider angle of view than the interchangeable telephoto lens of a camera having the configuration of FIG. 2. In the particular case of a widely used digital single lens reflex camera, there is a problem in that the angle of view is narrow because the imaging elements used are smaller than for the 35mm film in a conventional silver halide camera. For example, in an APS-C size, which is the size of widely used imaging elements, the angle of view must be considered with a value of about 1.5 times the focal distance in the 35 mm film. In other words, depending on what is to be photographed, there may be cases in which the subject extends beyond the angle of view when the camera is pointed at the subject with conventional perception. Therefore, a converter lens unit capable of shortening the focal distance as in the present embodiment would be useful.

A 0.7 magnification converter lens unit was described above as an example, but it is apparent that a converter lens unit having smaller magnification other than 0.7 magnification can be realized.

Furthermore, a 1.7 magnification converter lens unit 14 is connected instead of the rear lens barrel section 13 to the front lens barrel section 11. This allows the focal distance obtained when the rear lens barrel section 13 is connected to be elongated 1.7 times, enabling the subject to be telephotographed with greater magnification. This 1.7 magnification converter lens unit 14 is provided with a connector 14a and a mount 14b that correspond to the connector 13a and the mount 13b of the rear lens barrel section 13. The camera body 16 can thus be connected to the front lens barrel section 11 via the 1.7 magnification converter lens unit 14. Converter lenses 14c, 14d having negative power that enables 1.7 times the focal distance are disposed inside the 1.7 magnification converter lens unit 14, as shown in FIG. 5. An interchangeable telephoto lens for a camera, having a focal distance of 850 mm and an aperture ratio of F9.5, is essentially obtained by such a configuration.

A 1.7 magnification converter lens unit was described above as an example, but it is apparent that a converter lens unit having greater magnification other than 1.7 magnification can be realized.

In the present embodiment, the OFB is sufficiently ensured, and the rear lens barrel section 13 can be disconnected, so that an erecting prism unit 15 as an image-erecting means and an eyepiece unit 17 are also connected instead of the rear lens barrel section 13 to enable the telephoto lens unit 1 to function as a terrestrial telescope.

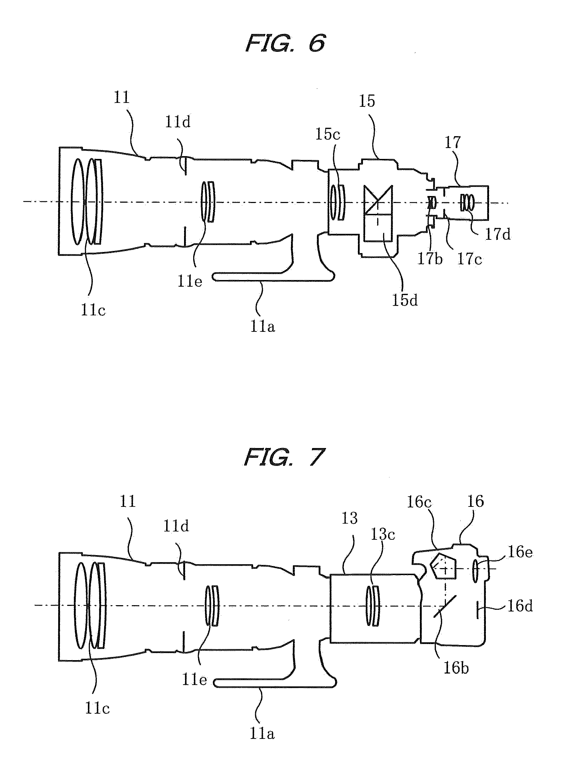

The erecting prism unit 15 is provided with a connector 15a corresponding to the connector 13a of the rear lens barrel section 13, and the erecting prism unit 15 can be connected to the front lens barrel section 11. Also, a connector 15b of the erecting prism unit 15 and a connector 17a of the eyepiece unit 17 are coupled together for mutual connection. As shown in FIG. 6, a correction lens 15c and an erecting prism 15d are disposed inside the erecting prism unit 15, and a lens 17b, an aperture 17c, and an eyepiece 17d are disposed inside the eyepiece unit 17. The erecting prism 15d is configured as a Porro prism or Dach prism, and is sized to suitably fit into the OFB space with enough space to ensure a sufficient field of view.

An image-erecting means using a prism enabling total reflection of light makes it possible to obtain a bright optical system because there is no loss of light, but on the other hand, inserting a prism causes longitudinal chromatic aberration and coma aberration to occur due to the light dispersion characteristics of the prism material. When a prism is used as the image-erecting means, a lens for correcting the aberration must be inserted to prevent degradation in performance. The correction lens 15c shown in FIG. 6 functions as an aberration correction lens. However, if a certain amount of performance degradation is allowed, this correction lens is not required. A correction lens is not required in an image-erecting means configured with a mirror.

Assuming that f (mm) is the focal distance, *φ*(mm) is the diagonal size of the solid-state imaging elements 16d, and *θ*1 (degrees) is the field of view of the telescope in the configuration of FIGS. 1 and 2, the angle of view *θ*2 (degrees) of the diagonal during camera photography is *θ*2 = 2 × ATAN (*φ*/(2 Xf)), where ATAN is the arctangent. It is ideal to realize a field of view of *θ*1 >=*θ*2, but actually, the image-erecting means is disadvantageously made too large. Accordingly, *θ*1 >=*θ*2 × 0.4 is the preferred size in practice. When *θ*1 <*θ*2 × 0.4, the field of view as a telescope is too narrow relative to the photographic field of view, making it difficult to achieve optimal viewing.

The telephoto lens unit 1 can thus be used as a terrestrial telescope. Furthermore, in situations where photography will be carried out after enjoying bird-watching or the like, the telephoto lens unit can be used as a telephoto lens for a camera by a simple exchange operation without the need to prepare a separate interchangeable lens.

In the embodiments described above, the focus lens 11e is disposed in the front lens barrel section 11. In the case that the focus lens 11e can only be adjusted manually using the focus ring 11b, it is also possible to add a focus lens 13c and AF mechanism (not shown) to the rear lens barrel section 13, as shown in FIG. 7, and to move the focus lens 13c forward and rearward in the optical axis direction by a control signal from the camera in order to achieve a partial autofocus function.

### Key to Symbols

| | |
|---|---|
| 1 | Telephoto lens unit |
| 11 | Front lens barrel section |
| 11c | Objective lens system |
| 11d | Aperture |
| 11e | Focus lens |
| 12 | 0.7 magnification converter lens unit |
| 13 | Rear lens barrel section |
| 14 | 1.7 magnification converter lens unit |
| 15 | Erecting prism unit |
| 16 | Camera body |
| 17 | Eyepiece unit |

## Claims

1. A telephoto lens unit having a lens barrel that supports a telephoto lens and capable of being mounted on and dismounted from a camera body, comprising:
a front lens barrel section that supports the telephoto lens with the subject side defined as the front, and a rear lens barrel section that can be mounted on and dismounted from the front lens barrel section,
wherein the distance from the image-most surface of the telephoto lens to the image formation plane of the telephoto lens is set to be a distance in which a converter lens unit that shortens the focal distance is mounted on the front lens barrel section instead of the rear lens barrel section to enable photography with a shortened focal distance.

2. A telephoto lens unit according to claim 1, wherein a converter lens unit that elongates the focal length is mounted on the front lens barrel section instead of the rear lens barrel section to enable photography with an elongated focal distance.

3. A telephoto lens unit having a lens barrel that supports a telephoto lens and capable of being mounted on and dismounted from a camera body, comprising:
a front lens barrel section that supports the telephoto lens with the subject side defined as the front, and a rear lens barrel section that can be mounted on and dismounted from the front lens barrel section,
wherein the distance from the image-most surface of the telephoto lens to the image formation plane of the telephoto lens is set to be a distance in which an image-erecting means and an eyepiece unit are connected instead of the rear lens barrel section to enable the telephoto lens to function as a terrestrial telescope.

4. A telephoto lens unit according to claim 3, wherein the image-erecting means has a field of view of *θ*1 >=*θ*2 × 0.4, where *θ*1 is the field of view when used as the terrestrial telescope, and *θ*2 is the diagonal angle of view during camera photography.
